# EUROPÄISCHE PATENTSCHRIFT

(11) **EP 2 275 963 B1**
(45) Veröffentlichungstag und Bekanntmachung des Hinweises auf die Patenterteilung: **31.10.2012**
(21) Anmeldenummer: 10178180.5
(22) Anmeldetag: 12.05.2005
(51) Int. Cl.: G06K 7/00, G06K 19/073, G07F 7/10, G07C 9/00, G06Q 10/08, G06Q 30/00, G06K 17/00

(54) **Verfahren, RFID-Tag und System zur Übertragung von RFID Identifikationsdaten**
Method, RFID tag and system for transmission of RFID identification data
Procédé, étiquette RFID et système pour la transmission des données d'identification RFID

(43) Veröffentlichungstag der Anmeldung: 19.01.2011
(62) Teilanmeldung aus: 05103994.9
(73) Patentinhaber: Swisscom AG, 3050 Bern (CH)
(72) Erfinder: Riordan, John, 3006 Bern (CH); Cantini, Renato, 1782 Belfaux (CH)
(74) Vertreter: BOVARD AG

(56) Entgegenhaltungen:
- WO-A-03/058551
- US-A- 6 150 948

## Beschreibung

### Technisches Gebiet

Die vorliegende Erfindung betrifft ein Verfahren, ein RFID-Tag und ein System zur Übertragung von RFID-Identifikationsdaten an ein RFID-Lesegerät.

### Stand der Technik

Im Stand der Technik sind Verfahren zur Übertragung von RFID-Identifikationsdaten (RFID: Radio Frequency Identification) bekannt. Diese Verfahren basieren auf einem RFID-Tag, welcher Speichermittel zur Speicherung von RFID-Identifikationsdaten umfasst, sowie auf einem RFID-Lesegerät, welches Sende- und Empfangsmittel zur Aussendung und für den Empfang von Radiowellen umfasst. Mittels des RFID-Lesegeräts werden Radiowellen an den RFID-Tag übertragen. Dabei wird der RFID-Tag zur Aussendung von Radiowellen angeregt, wobei beispielsweise mittels einer geeigneten Modulation RFID-Identifikationsdaten an das RFID-Lesegerät übertragen werden. Grundsätzlich wird zwischen so genannten aktiven RFID-Tags und passiven RFID-Tags unterschieden. Passive RFID-Tags beziehen die Energie zur Aussendung von Radiowellen aus der Energie der empfangenen Radiowellen. Aktive RFID-Tags verfügen über einen internen Energiespeicher. Passive RFID-Tags sind typischerweise kleiner und leichter als aktive RFID-Tags. Ein passiver RFID-Tag hat normalerweise eine geringere Reichweite, jedoch eine längere Lebensdauer als ein aktiver RFID-Tag. RFID-Tags werden beispielsweise für die Kennzeichnung von Waren, Produkten oder auch für die Kennzeichnung von Tieren eingesetzt. RFID-Tags werden auch für die Überwachung oder Benutzungskontrolle als elektronische Schlüssel, elektronisches Zahlungsmittel oder elektronische Fahrkarten eingesetzt. So verfügen heutzutage beispielsweise viele Zündschlüssel für Fahrzeuge über einen RFID-Tag, wobei beispielsweise nach dem Einstecken des Zündschlüssels in das Zündschloss eine elektronische Wegfahrsperre des Fahrzeugs mittels einer Übertragung von entsprechenden RFID-Identifikationsdaten entblockiert wird. Weiter werden RFID-Tags auch für die Zugangskontrollen wie beispielsweise bei Türen eingesetzt, wobei ein RFID-Tag beispielsweise in einer Personalkarte angebracht wird, wobei berechtigte Personen für den Zugang in einen zugangskontrollierten Bereich eines Betriebes ihre Personalkarte in den Wirkungsbereich eines RFID-Lesegeräts bringen, und wobei RFID-Identifikationsdaten vom RFID-Tag auf das RFID-Lesegerät übermittelt und zur Steuerung eines Schliesssystems verwendet werden. Zudem werden RFID-Tags auch als elektronisches Zahlungsmittel verwendet. Dabei wird ein RFID-Tag z.B. in einer Kundenkarte angebracht. Dem RFID-Tag wird ein Konto zugeordnet und es wird z.B. bei der Kasse eines Geschäfts ein RFID-Lesegerät aufgestellt. Zur Bezahlung von Waren bringt der Kunde die Kundenkarte in den Wirkungsbereich des RFID-Lesegeräts, wobei die RFID-Identifikationsdaten des in der Kundenkarte angebrachten RFID-Tags dazu verwendet werden, um einen Geldbetrag vom Konto des Kunden abzubuchen. Die Durchdringung unseres Alltags mit RFID-Tags nimmt wegen den vielfältigen Anwendungsmöglichkeiten von RFID-Tags laufend zu. So verfügen inzwischen viele Personen über RFID-Tags für das Öffnen der Haustür, für das Öffnen der Garagentür, für den Zugang in den Betrieb, für den Zugang ins Personalrestaurant, für den Kauf von Fahrkarten, für den Kauf von Lebensmitteln oder für den Restaurant- oder Barbesuch. Oft sind jedoch die Anwendungen von RFID-Tags nicht aufeinander abgestimmt, sodass beispielsweise für jedes der genannten Beispiele eine separate Karte mit angebrachtem RFID-Tag mitgeführt werden muss. Bei der Verwendung von derartigen RFID-Tags ist es beispielsweise auch nicht möglich, dass auf der Seite des Benutzers ein Protokoll über die Verwendung des RFID-Tags erstellt werden kann. Ein solches Protokoll ist zwar auf der Seite des RFID-Lesegeräts erstellbar, der Benutzer hat jedoch keine Möglichkeit bei einem Protokollfehler auf der Seite des RFID-Lesegeräts die Verwendung des RFID-Tags mit einem eigenen Protokoll, beispielsweise für eine Gegendarstellung, zu dokumentieren. Der Benutzer eines RFID-Tags kann auch nicht ausschliessen, dass RFID-Identifikationsdaten von einem oder mehreren RFID-Tags unberechtigt ausgelesen werden. Handelt es sich beispielsweise um ein RFID-Lesegerät an einer Kasse, dann wird von Kunden oft die ganze Brieftasche auf das RFID-Lesegerät gelegt und dabei vergessen, dass damit RFID-Identifikationsdaten von allen RFID-Tags, welche sich in der Brieftasche befinden, irrtümlich oder missbräuchlich ausgelesen werden können.

Das Dokument WO 031058551, als nächsten Stand der Technik beschreibt einen RFID-Transponder, welcher einen Speicher für den Lese- und Schreibzugriff aufweist. Der Speicher kann unterschiedliche Speichersektoren umfassen, wobei Speichersektoren für den Datenzugriff freigegeben werden können, falls entsprechende Zugriffsrechte verwendet werden. Zudem wird im Dokument US 6,150,948 ein RFID-Lesegerät mit einem passiven Infrarot (so genannten PIR) Detektor beschrieben. Mittels des passiven Infrarot Detektors wird überwacht, ob ein Objekt in den Wirkungsbereich des RFID-Lesegeräts gebracht wird und die Energieversorgung des RFID-Lesegeräts wird gegebenenfalls eingeschaltet. Allerdings ermöglichen auch diese Lösungen nicht, dass ein RFID-Tag auf bequeme Weise für verschiedene Aufgaben verwendet werden kann.

### Offenbarung der Erfindung

Es ist eine Aufgabe der vorliegenden Erfindung, ein neues Verfahren, ein RFID-Tag und ein neues System zum Übertragen von RFID-Identifikationsdaten an ein RFID-Lesegerät vorzuschlagen, welche insbesondere die beschriebenen Probleme des Standes der Technik nicht aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mindestens zwei Request-IDs mit zugeordneten RFID-Identifikationsdaten in einer Lookup-Tabelle in einem Speichermodul abgespeichert werden, dass ein RFID-Lesegerät einen Request zur Übertragung von RFID-Identifikationsdaten an ein RFID-Tag sendet, wobei der Request mindestens eine Request-ID umfasst, dass das RFID-Tag die Request-ID des Requests zur Übertragung von RFID-Identifikationsdaten an eine Steuereinheit des RFID-Tags überträgt, dass die Steuereinheit mittels der im Speichermodul abgespeicherten Lookup-Tabelle die der Request-ID zugeordneten RFID-Identifikationsdaten bestimmt, und dass mittels des RFID-Tags die der Request-ID zugeordneten RFID-Identifikationsdaten an das RFID-Lesegerät übertragen werden. Ein solches Verfahren hat insbesondere den Vorteil, dass mittels nur einem RFID-Tag die RFID-Identifikationsdaten auf unterschiedliche Verwendungen abstimmbar sind.

In einer Ausführungsvariante sendet das RFID-Lesegerät den Request zur Übertragung von RFID-Identifikationsdaten basierend auf Daten eines dem RFID-Lesegerät zugeordneten Bewegungsdetektors aus. Eine solche Ausführungsvariante hat insbesondere den Vorteil, dass das RFID-Lesegerät nur dann aktiviert wird, wenn eine Übertragung von RFID-Identifikationsdaten zu erwarten ist. Dies führt einerseits zu einer Energieersparnis und andererseits zu einer Reduktion von Elektrosmog.

In einer weiteren Ausführungsvariante sendet das RFID-Lesegerät den Request zur Übertragung von RFID-Identifikationsdaten zu bestimmbaren Zeitpunkten oder nach Ablauf von bestimmbaren Zeitintervallen aus. Eine solche Ausführungsvariante hat insbesondere den Vorteil, dass das RFID-Lesegerät nur zu bestimmbaren Zeitpunkten aktiviert werden muss und somit insbesondere eine Energieersparnis und eine Reduktion von Elektrosmog erzielbar ist.

In einer anderen Ausführungsvariante wird die Lookup-Tabelle in einem Speichermodul der Steuereinheit abgespeichert. Diese Ausführungsvariante hat insbesondere den Vorteil, dass der RFID-Tag besonders kompakt ausgeführt werden kann.

In einer Ausführungsvariante wird die Lookup-Tabelle in ein Speichermodul einer mit einem Telekommunikationsnetzwerk verbindbaren Zentraleinheit abgespeichert. Diese Ausführungsvariante hat insbesondere den Vorteil, dass Request-IDs und RFID-Identifikationsdaten zentral verwaltet und dass mittels des Telekommunikationsnetzwerks, insbesondere mittels eines Mobilfunknetzwerks, RFID-Identifikationsdaten stets verfügbar sind.

In einer anderen Ausführungsvariante fordert die Steuereinheit mittels einer von einem Benutzer bedienbaren Eingabeeinheit eine Bestätigungseingabe des Benutzers zur Übertragung von RFID-Identifikationsdaten an das RFID-Lesegerät an. Eine solche Ausführungsvariante hat insbesondere den Vorteil, dass der Benutzer stets über die Übertragung von RFID-Identifikationsdaten informiert wird.

In einer weiteren Ausführungsvariante werden bestimmbare Request-IDs und/oder RFID-Identifikationsdaten aus der Lookup-Tabelle mit abspeicherbaren Request-IDs und entsprechenden RFID-Identifikationsdaten gelöscht, in dieser Lookup-Tabelle modifiziert und/oder zu dieser Lookup-Tabelle hinzugefügt. Eine solche Ausführungsvariante hat insbesondere den Vorteil, dass Einträge der Lookup-Tabelle beispielsweise durch den Benutzer aktualisiert werden können.

In einer anderen Ausführungsvariante wird mittels der Steuereinheit die Übertragung von RFID-Identifikationsdaten protokolliert. Eine solche Ausführungsvariante hat insbesondere den Vorteil, dass die Übertragung von RFID-Identifikationsdaten belegt werden kann.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:
Figur 1 zeigt ein Blockdiagramm eines erfindungsgemässen Systems.
Figur 2 zeigt ein Blockdiagramm einer Lookup-Tabelle.

### Ausführungsform(en) der Erfindung

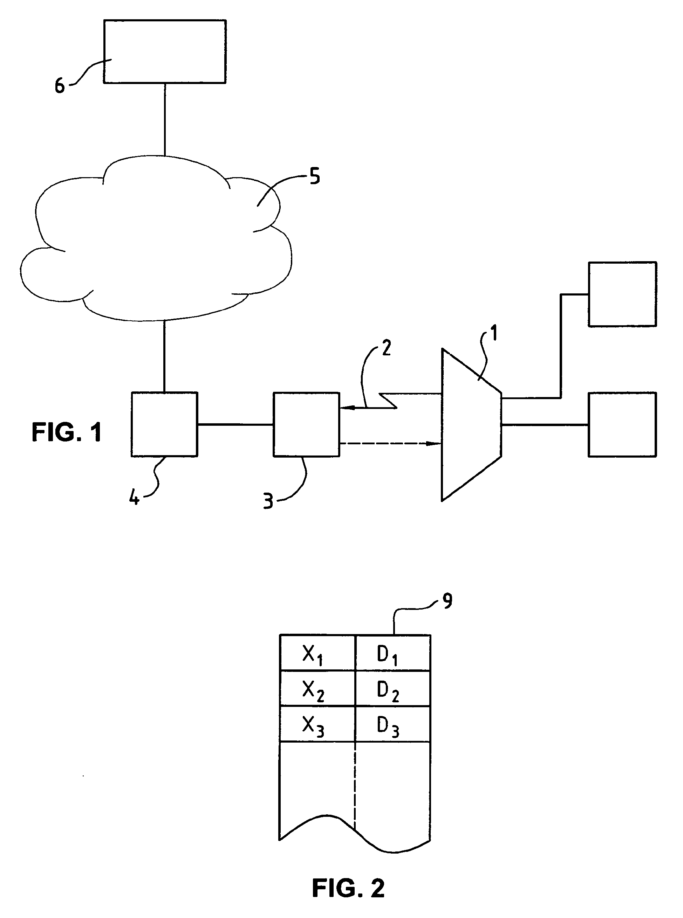

In Figur 1 bezieht sich das Bezugszeichen 1 auf ein RFID-Lesegerät und das Bezugszeichen 3 bezieht sich auf einen RFID-Tag. Das RFID-Lesegerät unterstützt beispielsweise die Übertragung von RFID-Identifikationsdaten von RFID-Tags gemäss dem ISO 15693 Standard, gemäss dem Tag-it HF (TI) Standard, gemäss dem I-code (Philips) Standard oder gemäss irgendeinem anderen Standard. Das Bezugszeichen 2 bezieht sich auf einen Request des RFID-Lesegeräts 1 zur Übertragung von RFID-Identifikationsdaten. Der Request 2 umfasst mindestens eine Request-ID. Die Request-ID kann beispielsweise mittels eines Schreibmodus des RFID-Lesegeräts auf den RFID-Tag 3 übertragen werden. Der Request 2 kann also beispielsweise zweiteilig aufgebaut sein. In einem ersten Teil wird die Request-ID durch das Schreiben von Daten vom RFID-Lesegerät auf dem RFID-Tag 3 abgespeichert. In einem zweiten Teil werden in einem Lesemodus RFID-Identifikationsdaten durch das RFID-Lesegerät 1 aus dem RFID-Tag 3 ausgelesen. Der RFID-Tag 3 verfügt dabei über die notwendigen Mittel, wie beispielsweise eine Antenne und elektronische Bauelemente, für den Empfang und das Abspeichern von Daten sowie zur Übertragung von RFID-Identifikationsdaten an das RFID-Lesegerät 1. In Figur 1 bezieht sich das Bezugszeichen 4 auf eine Steuereinheit. Die Steuereinheit 4 kann beispielsweise mittels weiterer elektronischer Bauelemente im RFID-Tag integriert sein. In einer Ausführungsvariante ist der RFID-Tag am Gehäuse eines Mobilfunktelefons angebracht, wobei der RFID-Tag über eine Schnittstelle mit dem Mobilfunktelefon verbindbar ist, und wobei die Steuereinheit 4 beispielsweise als Softwaremodul ausgestaltet ist, welches auf einem Mikroprozessor des Mobilfunktelefons abläuft. Die Steuereinheit 4 umfasst Mittel, um Daten, insbesondere die Request-ID, aus dem RFID-Tag auszulesen und um Daten, insbesondere RFID-Identifikationsdaten, auf dem RFID-Tag abzuspeichern.

In Figur 2 bezieht sich das Bezugszeichen 9 auf eine Lookup-Tabelle. Die Lookup-Tabelle 9 ist derart eingerichtet, dass die Steuereinheit 4 auf Daten der Lookup-Tabelle 9 zugreifen kann. Beispielsweise ist die Lookup-Tabelle 9 in der Steuereinheit 4 angebracht. Die Lookup-Tabelle 9 umfasst Request-IDs sowie den Request-IDs zugeordnete RFID-Identifikationsdaten. Mittels geeigneter Mittel können Daten in der Lookup-Tabelle 9 abgespeichert, modifiziert oder gelöscht werden. Beispielsweise können mittels der Eingabeelemente und einer Menuführung eines Mobilfunktelefons sowohl die Request-IDs als auch die RFID-Identifikationsdaten eingegeben und mittels eines Softwaremoduls in der Lookup-Tabelle 9 der als Softwaremodul ausgestalteten Steuereinheit 4 abgespeichert werden.

In einem Anwendungsbeispiel ist das RFID-Lesegerät mit einem Steuergerät zur Steuerung des Schliessmechanismus einer Eingangstüre verbunden. Das RFID-Lesegerät ist beispielsweise so konfiguriert, dass dieses zu bestimmbaren Zeitpunkten überprüft, ob ein RFID-Tag im Wirkungsbereich des RFID-Lesegeräts detektierbar ist. Sobald ein RFID-Tag detektiert wird, sendet das RFID-Lesegerät einen Request zur Übertragung von RFID-Identifikationsdaten 2. In einer anderen Variante ist das RFID-Lesegerät mit einem Bewegungsdetektor zur Detektion von Bewegungen innerhalb des Wirkungsbereichs des RFID-Lesegeräts verbunden. Sobald der Bewegungsdetektor eine entsprechende Bewegung detektiert, sendet das RFID-Lesegerät einen Request zur Übertragung von RFID-Identifikationsdaten 2 aus. Wie erwähnt, kann der Request zur Übertragung von RFID-Identifikationsdaten 2 aus zwei Teilen bestehen. In einem ersten Teil schreibt das RFID-Lesegerät in einem Schreibmodus eine Request-ID auf den RFID-Tag und in einem zweiten Teil sendet das RFID-Lesegerät eine Aufforderung zur Übertragung von RFID-Identifikationsdaten an den RFID-Tag. Die Steuereinheit 4 ist beispielsweise so eingerichtet, dass der Speicherbereich des RFID-Tags zur Abspeicherung einer Request-ID zu bestimmbaren Zeitpunkten, beispielsweise nach Ablauf von bestimmbaren Zeitintervallen, auf neue Daten überprüft wird. Somit kann eine Request-ID, welche durch das RFID-Lesegerät auf den RFID-Tag geschrieben wird, innerhalb eines bestimmbaren Zeitintervalls von der Steuereinheit 4 erfasst werden. Selbstverständlich sind dem Fachmann eine Vielzahl von anderen Möglichkeiten bekannt um zu gewährleisten, dass eine Request-ID an die Steuereinheit 4 übertragen werden kann. Mittels der Lookup-Tabelle 9 ordnet die Steuereinheit 4 der Request-ID die entsprechenden RFID-Identifikationsdaten zu und speichert diese RFID-Identifikationsdaten auf dem RFID-Tag ab. Vom Abspeichern der Request-ID durch das RFID-Lesegerät bis zum Abspeichern der RFID-Identifikationsdaten durch die Steuereinheit 4 wird ein bestimmbares Zeitintervall beansprucht. In diesem Zeitintervall kann die Aufforderung des RFID-Lesegeräts zur Übertragung von RFID-Identifikationsdaten durch den RFID-Tag nicht beantwortet werden. Das RFID-Lesegerät ist deshalb beispielsweise so eingerichtet, dass dieses die Aufforderung zur Übertragung von RFID-Identifikationsdaten beispielsweise erst nach einer bestimmbaren Zeitverzögerung aussendet oder diese Aufforderung zu bestimmbaren Zeitpunkten wiederholt. Sobald die RFID-Identifikationsdaten vom RFID-Lesegerät empfangen worden sind, können diese an weitere Geräte, wie beispielsweise das eingangs dieses Abschnitts erwähnte Steuergerät zur Steuerung eines Schliessmechanismus einer Eingangstüre, übertragen und von diesen Geräten weiter verarbeitet werden (wie beispielsweise das Überprüfen der RFID-Identifikationsdaten und gegebenenfalls Freischalten des Schliessmechanismus der Eingangstüre).

In einer vorteilhaften Ausführungsvariante ist der RFID-Tag an einem Mobilfunkgerät angebracht und die Steuereinheit 4 ist als Softwaremodul, welches auf einem Mikroprozessor des Mobilfunkgeräts ablauffähig ist, ausgestaltet. Die Steuereinheit 4 ist somit wie in Figur 1 gezeigt über ein Telekommunikationsnetzwerk 5 mit einer Zentraleinheit 6 des Telekommunikationsnetzwerks 5 verbindbar. Eine solche Ausführungsvariante führt zu einer grossen Vielzahl vorteilhafter Anwendungen. Beispielsweise kann so ein Backup der Lookup-Tabelle 9 auf der Zentraleinheit 6 abgespeichert werden. Dies hat insbesondere den Vorteil, dass ein Benutzer bei einem Verlust des Mobilfunkgeräts seine bevorzugten RFID-Identifikationsdaten sehr bequem auf ein Ersatzgerät übertragen kann. Oder es können beispielsweise in der Steuereinheit 4 und/oder der Zentraleinheit 6 elektronische Schlüssel zur Authentifizierung und/oder Verschlüsselung von Request-IDs, RFID-Identifikationsdaten oder irgendwelchen anderen Daten, welche für die Durchführung des Verfahrens vorteilhafte Wirkungen haben, abgespeichert werden. Dies hat insbesondere den Vorteil, dass beispielsweise die Lookup-Tabelle 9 in der Zentraleinheit 6 abgespeichert werden kann und dass ein Benutzer, bei Verwendung eines korrekten Schlüssels wie beispielsweise eines PIN (Personal Identification Number), mittels verschiedene Mobilfunkgeräte für die Bereitstellung von RFID-Identifikationsdaten verwenden kann.

## Patentansprüche

1. Verfahren zur Übertragung von RFID-Identifikationsdaten an ein RFID-Lesegerät (1), **dadurch gekennzeichnet,**
**dass** mindestens zwei Request-IDs (x₁,x₂,x₃) mit zugeordneten RFID-Identifikationsdaten (D₁,D₂,D₃) in einer Lookup-Tabelle (9) in einem Speichermodul abgespeichert werden,
**dass** das RFID-Lesegerät (1) einen Request zur Übertragung von RFID-Identifikationsdaten (2) an einen RFID-Tag (3) sendet, wobei der Request mindestens eine Request-ID umfasst,
**dass** der RFID-Tag (3) die Request-ID des Requests zur Übertragung von RFID-Identifikationsdaten an eine Steuereinheit (4) des RFID-Tags (3) überträgt,
**dass** die Steuereinheit (4) mittels der im Speichermodul abgespeicherten Lookup-Tabelle (9) die der Request-ID zugeordneten RFID-Identifikationsdaten bestimmt, und
**dass** mittels des RFID-Tags (3) die der Request-ID zugeordneten RFID-Identifikationsdaten an das RFID-Lesegerät (1) übertragen werden.

2. Verfahren nach Anspruch 1, **dadurch gekennzeichnet, dass** das RFID-Lesegerät den Request zur Übertragung von RFID-Identifikationsdaten basierend auf Daten eines dem RFID-Lesegerät zugeordneten Bewegungsdetektors aussendet.

3. Verfahren nach einem der Ansprüche 1 bis 2, **dadurch gekennzeichnet, dass** das RFID-Lesegerät den Request zur Übertragung von RFID-Identifikationsdaten zu bestimmbaren Zeitpunkten oder nach Ablauf von bestimmbaren Zeitintervallen aussendet.

4. Verfahren nach einem der Ansprüche 1 bis 3, **dadurch gekennzeichnet, dass** die Lookup-Tabelle in einem Speichermodul der Steuereinheit abgespeichert wird.

5. Verfahren nach einem der Ansprüche 1 bis 4, **dadurch gekennzeichnet, dass** die Lookup-Tabelle in ein Speichermodul einer mit einem Telekommunikationsnetzwerk (5) verbindbaren Zentraleinheit (6) abgespeichert wird.

6. Verfahren nach einem der Ansprüche 1 bis 5, **dadurch gekennzeichnet, dass** die Steuereinheit mittels einer von einem Benutzer bedienbaren Eingabeeinheit eine Bestätigungseingabe des Benutzers zur Übertragung von RFID-Identifikationsdaten an das RFID-Lesegerät anfordert.

7. Verfahren nach einem der Ansprüche 1 bis 6, **dadurch gekennzeichnet, dass** die Steuereinheit mittels einer von einem Benutzer ablesbare Anzeigeeinheit mindestens eine Identifikation von RFID-Identifikationsdaten dem Benutzer anzeigt.

8. Verfahren nach einem der Ansprüche 1 bis 7, **dadurch gekennzeichnet, dass** bestimmbare Request-IDs und/oder RFID-Identifikationsdaten aus der Lookup-Tabelle mit abspeicherbaren Request-IDs und entsprechenden RFID-Identifikationsdaten gelöscht, in dieser Lookup-Tabelle modifiziert und/oder zu dieser Lookup-Tabelle hinzugefügt werden.

9. Verfahren nach einem der Ansprüche 1 bis 8, **dadurch gekennzeichnet, dass** mittels der Steuereinheit (4) die Übertragung von RFID-Identifikationsdaten protokolliert wird.

10. RFID-Tag (3), welcher eine Steuereinheit (4) und ein Speichermodul zum Abspeichern von RFID-Identifikationsdaten aufweist,
**dadurch gekennzeichnet,**
**dass** das Speichermodul eine Lookup-Tabelle aufweist, wobei mindestens zwei Request-IDs (x₁, x₂, x₃) mit zugeordneten RFID-Identifikationsdaten (D₁, D₂, D₃) in der Lookup-Tabelle (9) abspeicherbar sind, und
**dass** ein von einem RFID-Lesegerät (1) erhaltener Request zur Übertragung von RFID-Identifikationsdaten (2), welcher mindestens eine Request-ID umfasst, an die Steuereinheit (4) übertragbar ist,
**dass** mittels der im Speichermodul abgespeicherten Lookup-Tabelle (9) die der Request-ID zugeordneten RFID-Identifikationsdaten bestimmbar sind, und
**dass** mittels des RFID-Tags (3) die der Request-ID zugeordneten RFID-Identifikationsdaten an das RFID-Lesegerät (1) aussendbar sind.

11. System zur Übertragung von RFID-Identifikationsdaten, wobei
das System mindestens ein RFID-Lesegerät (1) und mindestens einen RFID-Tag (3) nach Anspruch 10 aufweist, und
die RFID-Identifikationsdaten vom RFID-Tag (3) an das RFID-Lesegerät (1) übertragbar sind.

12. System nach Anspruch 11, **dadurch gekennzeichnet, dass** Request-IDs und RFID-Identifikationsdaten über ein Telekommunikationsnetzwerk zwischen der Steuereinheit (4) und einer Zentraleinheit (6) übertragbar sind.

13. System nach einem der Ansprüche 11 bis 12, **dadurch gekennzeichnet, dass** die Übertragung von RFID-Identifikationsdaten mittels einer von einem Benutzer bedienbaren Bestätigungseinheit auslösbar ist.

14. System nach einem der Ansprüche 11 bis 13, **dadurch gekennzeichnet, dass** einem Benutzer eine Identifikation von RFID-Identifikationsdaten mittels einer Anzeigeeinheit anzeigbar ist.

15. System nach einem der Ansprüche 11 bis 14, **dadurch gekennzeichnet, dass** die Übertragung von RFID-Identifikationsdaten mittels einer Protokolleinheit protokollierbar ist.

## Claims

1. Method for transmission of RFID identification data to an RFID reader (1), **characterised in that**
at least two request IDs (x₁,x₂,x₃) are stored with assigned RFID identification data (D₁,D₂,D₃) in a look-up table (9) in a memory module,
the RFID reader (1) sends a request (2) for transmission of RFID identification data to an RFID tag (3), the request comprising at least one request-ID,
the RFID tag (3) transmits the request-ID of the request for transmission of RFID identification data to a control unit (4) for the RFID tag (3),
the control unit (4) determines the RFID identification data, assigned to the request-ID, by means of the look-up table (9) stored in the memory module, and
the RFID identification data assigned to the request-ID are transmitted to the RFID reader (1) by means of the RFID tag (3).

2. Method according to claim 1, **characterised in that** the RFID reader transmits the request for transmission of RFID identification data based on data of a motion detector assigned to the RFID reader.

3. Method according to one of the claims 1 to 2, **characterised in that** the RFID reader transmits the request for transmission of RFID identification data at definable points in time or after expiration of definable time intervals.

4. Method according to one of the claims 1 to 3, **characterised in that** the look-up table is stored in a memory module of the control unit.

5. Method according to one of the claims 1 to 4, **characterised in that** the look-up table is stored in a memory module of a central unit (6) connectible to a telecommunications network (5).

6. Method according to one of the claims 1 to 5, **characterised in that** the control unit requests a confirmation entry of the user, by means of an input unit able to be operated by a user, for transmission of RFID identification data to the RFID reader.

7. Method according to one of the claims 1 to 6, **characterised in that**, by means of a display unit readable by a user, the control unit displays to the user at least one identification of RFID identification data.

8. Method according to one of the claims 1 to 7, **characterised in that** definable request-IDs and/or RFID identification data are deleted from the look-up table with storable request IDs and corresponding RFID identification data, are modified in this look-up table and/or are added to this look-up table.

9. Method according to one of the claims 1 to 8, **characterised in that** the transmission of RFID identification data is logged by means of the control unit (4).

10. RFID tag (3) having a control unit (4) and a memory module for storing RFID identification data,
**characterised in that**
the memory module has a look-up table, at least two request-IDs (x₁,x₂,x₃) with assigned RFID identification data (D₁,D₂,D₃) being storable in the look-up table (9), and
a request, received from an RFID reader (1), for transmission of RFID identification data (2) comprising at least one request ID is transmittable to the control unit (4),
the RFID identification data assigned to the request ID are able to be determined by means of the look-up table (9) stored in the memory module, and
the RFID identification data assigned to the request ID are transmittable to the RFID reader (1) by means of the RFID tag (3).

11. System for transmission of RFID identification data,
the system having at least one RFID reader (1) and at least one RFID tag (3) according to claim 10, and
the RFID identification data being transmittable from the RFID tag (3) to the RFID reader (1).

12. System according to claim 11, **characterised in that** request IDs and RFID identification data are transmittable over a telecommunications network between the control unit (4) and a central unit (6).

13. System according to one of the claims 11 to 12, **characterised in that** the transmission of RFID identification data is able to be triggered by means of a confirmation unit able to be operated by a user.

14. System according to one of the claims 11 to 13, **characterised in that** an identification of RFID identification data is able to be shown to a user by means of a display unit.

15. System according to one of the claims 11 to 14, **characterised in that** the transmission of RFID identification data is able to be logged by means of a logging unit.

## Revendications

1. Méthode de transmission de données d'identification RFID à un appareil de lecture RFID (1), **caractérisée en ce**
**qu'**au moins deux identifiants de requête (x₁,x₂,x₃) avec des données d'identification RFID attribuées (D₁,D₂,D₃) sont enregistrées dans une table de correspondance (9) dans un module de mémoire,
**que** l'appareil de lecture RFID (1) envoie une requête pour la transmission de données d'identification RFID (2) à une balise RFID (3), la requête comprenant au moins un identifiant de requête,
**que** la balise RFID (3) retransmet l'identifiant de requête de la requête pour la transmission de données d'identification RFID à une unité de contrôle (4) de la balise RFID (3),
**que** l'unité de contrôle (4) détermine les données d'identification RFID attribuées à l'identifiant de requête par le biais de la table de correspondance (9) enregistrée dans le module de mémoire, et
**que** les données d'identification RFID attribuées à l'identifiant de requête sont retransmises à l'appareil de lecture RFID (1) par le biais de la balise RFID (3).

2. Méthode selon la revendication 1, **caractérisée en ce que** l'appareil de lecture RFID émet la requête pour la transmission des données d'identification RFID en se basant sur des données d'un détecteur de mouvements attribué à l'appareil de lecture RFID.

3. Méthode selon l'une quelconque des revendications 1 à 2, **caractérisée en ce que** l'appareil de lecture RFID émet la requête pour la transmission des données d'identification RFID à des instants déterminés ou au terme d'intervalles de temps déterminés.

4. Méthode selon l'une quelconque des revendications 1 à 3, **caractérisée en ce que** la table de correspondance est enregistrée dans un module de mémoire de l'unité de contrôle.

5. Méthode selon l'une quelconque des revendications 1 à 4, **caractérisée en ce que** la table de correspondance est enregistrée dans un module de mémoire d'une unité centrale liée à un réseau de télécommunications (5).

6. Méthode selon l'une quelconque des revendications 1 à 5, **caractérisée en ce que** l'unité de contrôle demande une confirmation d'entrée de la part de l'utilisateur pour la transmission des données d'identification RFID à l'appareil de lecture RFID par le biais d'une unité d'entrée maniable d'un utilisateur.

7. Méthode selon l'une quelconque des revendications 1 à 6, **caractérisée en ce que** l'unité de contrôle affiche à l'utilisateur au moins une identification des données d'identification RFID par le biais d'une console de visualisation lisible par un utilisateur.

8. Méthode selon l'une quelconque des revendications 1 à 7, **caractérisée en ce que** les identifiants de requête déterminables et/ou les données d'identification RFID sont effacés de la table de correspondance avec les identifiants de requête et des données d'identification RFID correspondantes enregistrables, modifiées dans cette table de correspondance et/ou ajoutées à cette table de correspondance.

9. Méthode selon l'une quelconque des revendications 1 à 8, **caractérisée en ce que** la transmission des données d'identification RFID est journalisée au moyen d'une unité de contrôle (4).

10. Balise RFID (3), qui comprend une unité de contrôle (4) et un module de mémoire pour l'enregistrement des données d'identification RFID,
**caractérisée en ce**
**que** le module de mémoire comprend une table de correspondance, au moins deux identifiants de requête (x₁, x₂, x₃) avec des données d'identification RFID attribuées (D₁, D₂, D₃) étant enregistrables dans la table de correspondance (9), et
**qu'**une requête, comprenant au moins un identifiant de requête, reçue d'un appareil de lecture RFID (1) pour la transmission des données d'identification (2) est transmissible à l'unité de contrôle (4),
**que** les données d'identification RFID attribuées à l'identifiant de requête sont déterminables au moyen d'une table de correspondance (9) enregistrée dans le module de mémoire, et
**que** les données d'identification RFID attribuées à l'identifiant de requête sont émissibles à l'appareil de lecture RFID au moyen de la balise RFID (3).

11. Système pour la transmission des données d'identification RFID,
le système comprenant au moins un appareil de lecture RFID (1) et au moins une balise RFID (3) selon la revendication 10, et
les données d'identification RFID étant transmissibles de la balise RFID (3) à l'appareil de lecture RFID (1),

12. Système selon la revendication 11, **caractérisé en ce que** les identifiants de requête et les données d'identification RFID sont transmissibles sur un réseau de télécommunications entre l'unité de contrôle (4) et une unité centrale (6).

13. Système selon l'une quelconque des revendications 11 à 12, **caractérisé en ce que** la transmission des données d'identification RFID est déclenchable au moyen d'une unité de confirmation maniable par un utilisateur.

14. Système selon l'une quelconque des revendications 11 à 13, **caractérisé en ce qu'**une identification des données d'identification RFID est affichable à l'utilisateur au moyen d'une console de visualisation.

15. Système selon l'une quelconque des revendications 11 à 14, **caractérisé en ce que** la transmission des données d'identification RFID est journalisable au moyen d'une unité de journalisation.
